# EUROPÄISCHE PATENTSCHRIFT

(11) **EP 4 335 656 B1**
(45) Veröffentlichungstag und Bekanntmachung des Hinweises auf die Patenterteilung: **25.03.2026**
(21) Anmeldenummer: 23192076.0
(22) Anmeldetag: 18.08.2023
(51) Int. Cl.: B60B 17/00, B60B 21/12

(54) **SCHALLDÄMPFUNGSVORRICHTUNG FÜR FAHRZEUGRÄDER**
SOUND DAMPING DEVICE FOR VEHICLE WHEELS
DISPOSITIF D'AMORTISSEMENT ACOUSTIQUE POUR ROUES DE VÉHICULE

(30) Priorität: 22.08.2022 AT 506442022
(43) Veröffentlichungstag der Anmeldung: 13.03.2024
(73) Patentinhaber: Siemens Mobility Austria GmbH, 1210 Wien (AT)
(72) Erfinder: Kern, Thomas, 8431 Gralla (AT); Schleinzer, Gerald, 8047 Graz (AT)
(74) Vertreter: Siemens Patent Attorneys

(56) Entgegenhaltungen:
- WO-A1-2021/198062
- CH-A5- 657 576
- DE-C1- 3 316 759
- US-A- 4 496 183
- US-A1- 2017 203 610

## Beschreibung

Die Erfindung betrifft eine Schalldämpfungsvorrichtung für Fahrzeugräder, insbesondere für Räder von Schienenfahrzeugen, umfassend ein Ringpaket mit zumindest einem offenen ersten Ring und einem offenen zweiten Ring, welchen eine viskoelastische erste Schicht oder ein offener Elastikring zwischengeordnet ist.

Bei einer Auslegung von Rädern von Fahrzeugen, beispielsweise von Schienenfahrzeugen, müssen durch Behörden oder Kunden festgelegte Geräuschgrenzwerte (z.B. betreffend Vorbeifahrtgeräusche der Fahrzeuge) berücksichtigt werden. Insbesondere bei hohen Fahrgeschwindigkeiten treten häufig starke Schallemissionen auf, welche oft durch Schallabsorber gedämpft werden. Weiterhin ist eine effektive Schalldämpfung in stark bebauten Umgebungen (z.B. für Fahrzeuge des Stadtverkehrs, wie beispielsweise Straßenbahnen) wichtig. Ferner kann es erforderlich sein, dass Schallabsorber hohen Temperaturen standhalten müssen.

Aus dem Stand der Technik ist beispielsweise die WO 2014/131676 A1 bekannt, in welcher ein schallgedämpftes Rad eines Schienenfahrzeugs beschrieben ist. An einem Radkranz, einer Radmitte zugewandt, sind paketartige Dämpfungselemente mit einer Mehrzahl an Schwingmassen unterschiedlicher Dicken vorgesehen. Diese Dämpfungselemente sind über viskoelastische Schichten mit dem Rad verbunden. Den Schwingmassen sind ferner viskoelastische Schichten unterschiedlicher Dicken zwischengeordnet.

Weiterhin zeigt die EP 0 466 540 A1 einen ringförmigen Schwingungsdämpfer, bei welchem offenen Ringen eine oder mehrere viskoelastische Schichten zwischengeordnet sind und welcher an einer Stirnseite eines Getrieberads in einer Vertiefung des Getrieberads vorgesehen ist.

Aus der WO 2021/198062 A1 ist darüber hinaus eine Schalldämpfungsvorrichtung bekannt, welche ein offenes Ringpaket aufweist, welches mit einem Rad eines Fahrzeugs verspannbar ist. In einer Öffnung zwischen Enden des Ringpakets ist ein Verschlussstück angeordnet.

Ferner zeigt die DE 198 32 266 C2 eine ringförmige Einspannvorrichtung für ein Rad eines Schienenfahrzeugs mit einem Schwingungsabsorber und einem thermischen Isolator.

Eine weitere Schalldämpfungsvorrichtung ist aus dem Dokument US 4 496 183 A bekannt.

Der Erfindung liegt die Aufgabe zugrunde, eine gegenüber dem Stand der Technik weiterentwickelte Schalldämpfungsvorrichtung anzugeben, welche in einer Umgebung mit hohen Temperaturen eingesetzt werden kann und welche zugleich konstruktiv einfach ist.

Erfindungsgemäß wird diese Aufgabe gelöst mit einer Schalldämpfungsvorrichtung nach Anspruch 1, bei welcher zumindest der erste Ring in einem Verbindungsbereich, über welchen zumindest der erste Ring in einer Vertiefung eines Radkörpers eines Rads mit dem Radkörper verspannbar ist, eine Mehrzahl an Ausnehmungen aufweist.

Dadurch wird, wenn das Ringpakets mit dem Rad verbunden ist, eine Kontaktfläche zwischen dem ersten Ring und dem Radkörper reduziert. Dies führt dazu, dass sich die Schalldämpfungsvorrichtung auch dann nicht übermäßig stark erwärmt, wenn beispielsweise das Rad aufgrund eines Wärmeeintrags durch einen Bremsklotz, welcher auf das Rad wirkt, oder aufgrund anderer Einflussfaktoren hohe Temperaturen aufweist. Eine Überschreitung einer zulässigen Temperatur der Schalldämpfungsvorrichtung wird dadurch vermieden.

Es ist beispielsweise denkbar, dass die Ausnehmungen an mehr als 50% eines Außenumfangs des ersten Rings angeordnet sind. Vorstellbar ist z.B. auch, dass die Ausnehmungen entlang des ganzen Außenumfangs angeordnet sind.

Weitere vorteilhafte Ausgestaltungen der erfindungsgemäßen Schalldämpfungsvorrichtung ergeben sich aus den Unteransprüchen.

Es ist beispielsweise hilfreich, wenn ein Verschlussstück mit dem Ringpaket verbunden ist, wobei das Verschlussstück in einer Öffnung zwischen einem ersten Ende des Ringpakets und einem zweiten Ende des Ringpakets angeordnet ist.

Dadurch ist das Ringpaket vor einem Herabfallen von einem Träger des Ringpakets (z.B. von einem Rad) geschützt. Es wird dadurch eine redundante Verlustsicherung ermöglicht, da der erste Ring zusätzlich verspannbar ist. Relativbewegungen des ersten Endes und des zweiten Endes des Ringpakets zueinander und gegeneinander werden aufgrund des Verschlussstücks auf ein vernachlässigbares bzw. notwendiges Ausmaß eingegrenzt.

Günstig kann es auch sein, wenn zwischen dem Verschlussstück und dem Ringpaket im Bereich des ersten Endes oder des zweiten Endes ein Spalt ausgebildet ist.

Dadurch werden ein Toleranzausgleich und eine vereinfachte Montage des Verschlussstücks bewirkt.

Eine besonders einfache und robuste Ausgestaltung erhält man, wenn das Ringpaket zumindest im Bereich des ersten Endes zumindest eine erste Bohrung aufweist, in welche ein Passstift des Verschlussstücks oder ein mit dem Verschlussstück verbundenes Passungsteil eingeführt ist.

In diesem Zusammenhang ist es auch hilfreich, wenn das Ringpaket im Bereich des zweiten Endes zumindest eine zweite Bohrung aufweist.

Dadurch wird eine Flexibilität in Bezug auf eine Orientierung des Verschlussstücks in der erfindungsgemäßen Schalldämpfungsvorrichtung erreicht. Der Passstift oder das Passungsteil kann in die erste Bohrung im Bereich des ersten Endes des Ringpakets, alternativ aber auch in die zweite Bohrung im Bereich des zweiten Endes des Ringpakets eingeführt werden.

Eine alternative Lösung zur Verbindung des Verschlussstücks mit dem Ringpaket wird erzielt, wenn zumindest im Bereich des ersten Endes das Ringpaket zumindest einen Passstift aufweist oder mit dem Ringpaket zumindest ein Passungsteil verbunden ist, welcher oder welches in eine Bohrung des Verschlussstücks eingeführt ist.

Günstig ist es außerdem, wenn das Ringpaket mit dem Verschlussstück verschraubt ist.

Durch diese Maßnahme wird eine besonders sichere Verbindung des Verschlussstücks mit dem Ringpaket bewirkt. Ist das Verschlussstück über den Passstift oder das Passungsteil mit dem Ringpaket gekoppelt und zusätzlich mit dem Ringpaket verschraubt, so wird eine redundante Verbindung des Verschlussstücks mit dem Ringpaket erreicht.

Eine vorteilhafte Lösung wird erzielt, wenn das Ringpaket das Verschlussstück überlappend ausgebildet und angeordnet ist. In diesem Zusammenhang ist es hilfreich, wenn der zumindest erste Ring zusammen mit dem Verschlussstück im Bereich der Öffnung einen Rücksprung bildend angeordnet ist.

Durch diese Maßnahmen wird auf dem Ringpaket ein Montagebereich (z.B. mit der ersten Bohrung oder dem Passstift bzw. dem Passungsteil) zur Verbindung des Verschlussstücks mit dem Ringpaket bereitgehalten.

Für einen Einführungsvorgang des Ringpakets beispielsweise in eine Radkörpervertiefung ist es vorteilhaft, wenn der zumindest erste Ring einen größeren Außendurchmesser als der zweite Ring aufweist.

Eine besondere sichere Verbindung des Ringpakets mit einem Rad erzielt man, wenn der zumindest erste Ring in einer Nut des Radkörpers, welche auf einer Seite eines Radkranzes des Rads, welche einer Lauffläche des Rads abgewandt ist, vorgesehen ist, mit dem Radkörper verspannbar ist.

Durch diese Maßnahme wird außerdem eine besonders effektive Schalldämpfung erreicht, da das Ringpaket nahe an der Lauffläche des Rads, d.h. in einem Bereich mit starker Schallemission, angeordnet ist.

Hilfreich ist es weiterhin, wenn das Verschlussstück in einer Weise ausgeführt und angeordnet ist, dass eine Gesamtunwucht des Rads mit der Schalldämpfungsvorrichtung gleich oder kleiner als ein Gesamtunwucht-Grenzwert des Rads ist.

Durch diese Maßnahme wird vermieden, dass das Rad aufgrund der erfindungsgemäßen Schalldämpfungsvorrichtung eine unzulässig große Gesamtunwucht aufweist.

Eine einfach zu fertigende Lösung im Hinblick auf eine Vermeidung einer übermäßigen Erwärmung der Schalldämpfungsvorrichtung erhält man erfindungsgemäß, wenn die Ausnehmungen in dem Verbindungsbereich als kantige oder/und gerundete Einkerbungen an einem Außenumfang des zumindest ersten Rings ausgebildet sind.

Nachfolgend wird die Erfindung anhand von Ausführungsbeispielen näher erläutert.

### Es zeigen beispielhaft:

- Fig. 1:: Einen Grundriss einer beispielhaften ersten Ausführungsvariante einer erfindungsgemäßen, mit einem Rad verbundenen Schalldämpfungsvorrichtung mit einem Ringpaket und einem Verschlussstück,
- Fig. 2:: Eine erste Teilansicht eines Seitenrisses einer beispielhaften zweiten Ausführungsvariante einer erfindungsgemäßen Schalldämpfungsvorrichtung in geschnittener Darstellung, wobei ein Ringpaket mit einem Rad verbunden ist,
- Fig. 3:: Eine zweite Teilansicht des Seitenrisses der beispielhaften zweiten Ausführungsvariante einer erfindungsgemäßen Schalldämpfungsvorrichtung in geschnittener Darstellung, wobei ein Verschlussstück sichtbar ist,
- Fig. 4:: Einen Grundriss einer beispielhaften dritten Ausführungsvariante einer erfindungsgemäßen Schalldämpfungsvorrichtung mit einem Ring, welcher an seinem Außenumfang eine Mehrzahl an als kantige Einkerbungen ausgebildeten Ausnehmungen aufweist, und
- Fig. 5:: Einen Grundriss einer beispielhaften vierten Ausführungsvariante einer erfindungsgemäßen Schalldämpfungsvorrichtung mit einem Ring, welcher an seinem Außenumfang eine Mehrzahl an als gerundete Einkerbungen ausgebildeten Ausnehmungen aufweist.

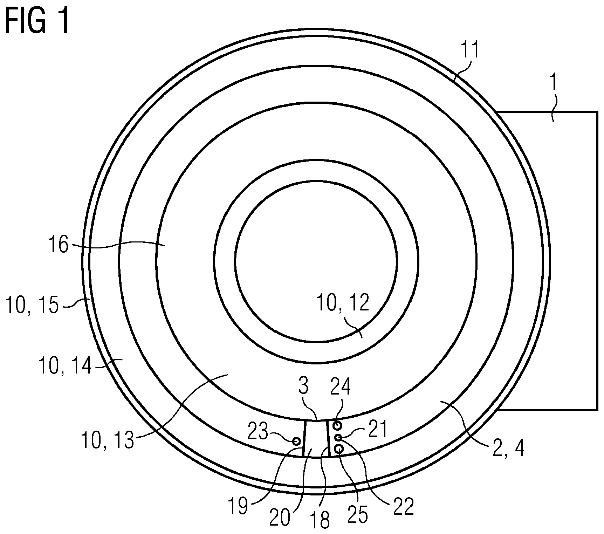

Fig. 1 zeigt einen Grundriss einer beispielhaften ersten Ausführungsvariante einer erfindungsgemäßen Schalldämpfungsvorrichtung, welche mit einem Rad eines Fahrwerks eines Schienenfahrzeugs, welches eine Klotzbremse 1 aufweist, verbunden ist.

Erfindungsgemäß ist es jedoch auch denkbar, dass das Fahrwerk keine oder eine andere Bremse aufweist. Weist das Fahrwerk beispielsweise eine Radscheibenbremse auf, so kann die erfindungsgemäße Schalldämpfungsvorrichtung innerhalb oder außerhalb eines Reibrings der Radscheibenbremse auf dem Rad angeordnet sein.

Die Schalldämpfungsvorrichtung umfasst ein Ringpaket 2 und ein Verschlussstück 3. Das Ringpaket 2 weist einen offenen ersten Ring 4, einen offenen zweiten Ring 5 und einen offenen dritten Ring 6 auf, welche über eine viskoelastische erste Schicht 7 sowie eine viskoelastische zweite Schicht 8 über Vulkanisierung miteinander verbunden sind.

Der zweite Ring 5, der dritte Ring 6 sowie die erste Schicht 7 und die zweite Schicht 8 sind in Fig. 1 nicht sichtbar.

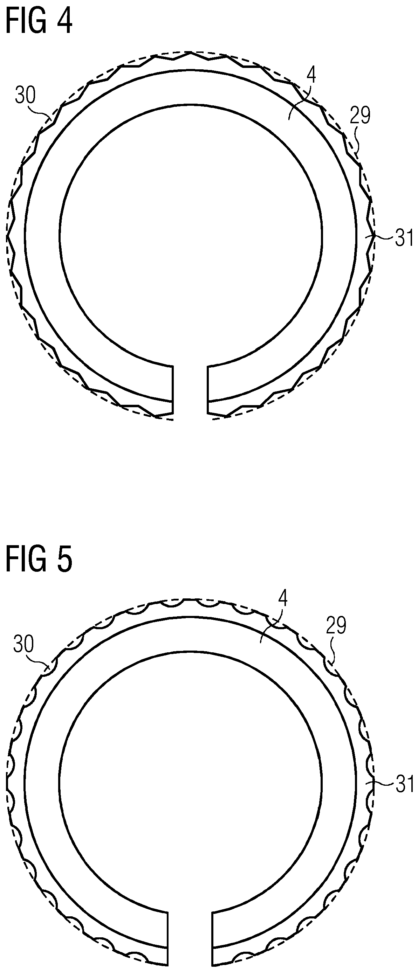

Der erste Ring 4 ist in eine als Nut 9 ausgebildete, in Fig. 1 nicht sichtbare Vertiefung eines Radkörpers 10 des Rads unter Eigenspannung eingeführt und in der Nut 9 mit dem Radkörper 10 verspannt. Ein Bereich des ersten Rings 4, wie er beispielhaft in Fig. 4 und Fig. 5 gezeigt ist und über welchen der erste Ring 4 mit dem Radkörper 10 verspannt ist, weist eine Mehrzahl an Ausnehmungen auf.

Das Rad umfasst den Radkörper 10 sowie eine Lauffläche 11, welche eine Schiene eines in Fig. 1 nicht gezeigten Gleises kontaktiert. Der Radkörper 10 weist eine Radnabe 12, einen Radsteg 13 sowie einen Radkranz 14 mit einem Spurkranz 15 auf.

Die Nut 9 ist umlaufend in dem Radkranz 14 auf einer der Lauffläche 11 abgewandten bzw. gegenüberliegenden Seite ausgebildet, wodurch sich das Ringpaket 2 in Richtung der Radnabe 12 bzw. in Richtung einer Radmitte erstreckt.

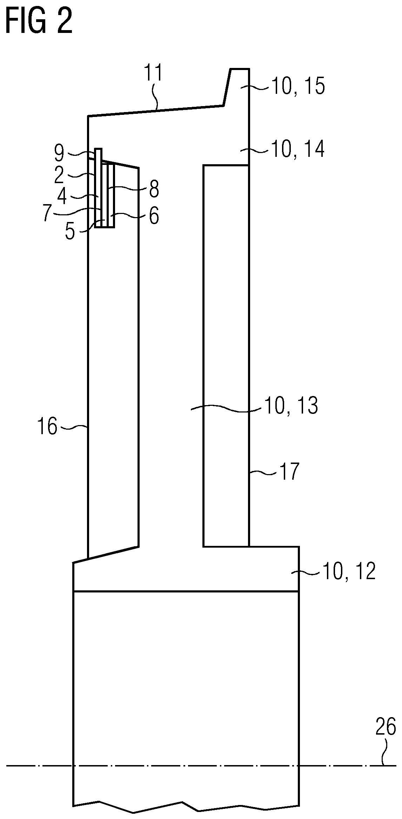

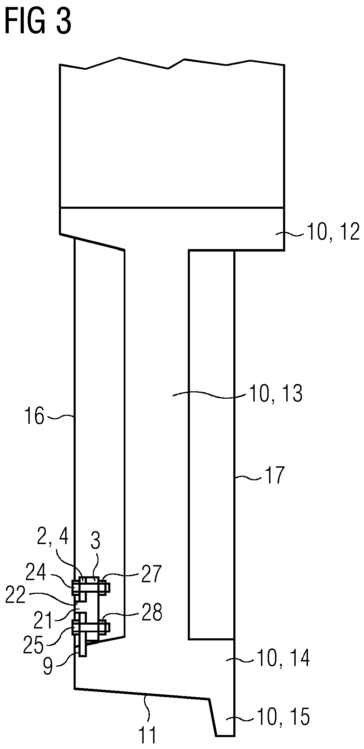

Der erste Ring 4 ist einer Radaußenseite 16, der dritte Ring 6 einer im Zusammenhang mit einer beispielhaften zweiten Ausführungsvariante einer erfindungsgemäßen Schalldämpfungsvorrichtung in Fig. 2 und Fig. 3 sichtbaren Radinnenseite 17 und dem Radsteg 13 zugewandt angeordnet. Der zweite Ring 5 ist dem ersten Ring 4 und dem dritten Ring 6 zwischengeordnet.

Zwischen dem dritten Ring 6 und dem Radsteg 13 ist ein ausreichender Freiraum zur Verbindung des Verschlussstücks 3 mit dem Ringpaket 2 vorgesehen.

Wie erwähnt sind der erste Ring 4, der zweite Ring 5 und der dritte Ring 6 als offene Ringe ausgeführt und ermöglichen dadurch ein Einführen des ersten Rings 4 in die Nut 9.

Das Ringpaket 2 weist dadurch weiterhin zwischen einem ersten Ende 18 des Ringpakets 2 und einem zweiten Ende 19 des Ringpakets 2 eine Öffnung 20 auf.

Diese Öffnung 20 ist in jenem in Fig. 1 gezeigten Montagezustand der erfindungsgemäßen Schalldämpfungsvorrichtung mittels des Verschlussstücks 3 teilweise ausgefüllt.

Das Verschlussstück 3 ist in diesem Montagezustand zwischen dem Radsteg 13 und dem ersten Ring 4 angeordnet, wobei der erste Ring 4 das Verschlussstück 3 im Bereich des ersten Endes 18 überlappt. Dadurch ist die Öffnung 20 im Bereich des ersten Rings 4 nicht durch das Verschlussstück 3 ausgefüllt. Vielmehr bildet der erste Ring 4 zusammen mit dem Verschlussstück 3 im Bereich der Öffnung 20 einen Rücksprung.

Das Verschlussstück 3 ist in Stahl ausgebildet und weist einen zylindrischen Passstift 21 auf, welcher einstückig mit dem Verschlussstück 3 ausgebildet ist. In jenem in Fig. 1 gezeigten Montagezustand ist der Passstift 21 mit einer Presspassung in eine erste Bohrung 22 des ersten Rings 4, welche im Bereich des ersten Endes 18 des Ringpakets 2 vorgesehen ist, eingeführt.

Zusätzlich sind das Verschlussstück 3 und der erste Ring 4 mittels einer ersten Sechskantschraube 24 und einer zweiten Sechskantschraube 25 miteinander verschraubt.

Im Bereich des zweiten Endes 19 ist zwischen dem Verschlussstück 3 und dem Ringpaket 2 ein schmaler Spalt entlang von Kanten des Verschlussstücks 3 und des Ringpakets 2 ausgebildet, welcher in Richtung einer beispielhaft in Fig. 2 gezeigten Radachse 26 verläuft.

Im Bereich des zweiten Endes 19 des Ringpakets 2 weist der erste Ring 4 eine zweite Bohrung 23 auf, wodurch das Verschlussstück 3 bei geeigneter geometrischer Ausbildung auch in einer in Bezug auf den in Fig. 1 gezeigten Montagezustand um 180° gedrehten Orientierung mit dem Ringpaket 2 verbunden werden kann, wobei der Passstift 21 in die zweite Bohrung 23 einzuführen ist. Soll das Verschlussstück 3 in dieser um 180° gedrehten Orientierung mit dem Ringpaket 2 verschraubt werden, so müssen im Bereich des zweiten Endes 19 des Ringpakets 2 zusätzliche Bohrungen für Schrauben gefertigt werden.

Erfindungsgemäß ist es jedoch auch denkbar, auf die zweite Bohrung 23 zu verzichten und den ersten Ring 4 im Bereich des zweiten Endes 19 des Ringpakets 2 bündig mit dem zweiten Ring 5 und dem dritten Ring 6 auszubilden.

Erfindungsgemäß ist es ferner auch vorstellbar, dass nicht das Verschlussstück 3 den Passstift 21 aufweist, sondern beispielsweise der erste Ring 4, und dass nicht der erste Ring 4 die erste Bohrung 22 aufweist, sondern das Verschlussstück 3.

Darüber hinaus ist es beispielsweise auch denkbar, dass mehr als ein Passstift 21 des Verschlussstücks 3 oder des ersten Rings 4 in eine entsprechende Anzahl an Bohrungen des ersten Rings 4 oder des Verschlussstücks 3 eingeführt sind.

Ferner ist es möglich, den Passstift 21 oder ein anderes Passungsteil (z.B. ein quaderförmiges Passungsteil) separat auszubilden und mit dem Verschlussstück 3 oder mit dem Ringpaket 2 zu verbinden (z.B. zu verschweißen, zu verspannen etc.).

Das Verschlussstück 3 ist quaderförmig ausgebildet. Erfindungsgemäß ist es jedoch auch denkbar, dass das Verschlussstück 3 eine kreisringsektorförmige oder eine trapezförmige Grund- und Deckfläche aufweist.

Bei einer kreisringsektorförmigen oder trapezförmigen Ausbildung der Grund- und Deckfläche ist jedoch ein Verlust an Flexibilität bei der Orientierung des Verschlussstücks 3 in der Öffnung 20 und bei dessen Verbindung mit dem Ringpaket 2 zu berücksichtigen.

Aufgrund seiner Anordnung in der Öffnung 20, seiner Form, seiner der Öffnung 20 angepassten Dimensionen sowie seiner Masse trägt das Verschlussstück 3 im Ausmaß von 12 m·g zu einer Gesamtunwucht des Rads und der Schalldämpfungsvorrichtung von 27 m·g bei. Diese Gesamtunwucht ist somit kleiner als ein Gesamtunwucht-Grenzwert des Rads von 30 m·g.

Zur Montage der erfindungsgemäßen Schalldämpfungsvorrichtung wird in einem ersten Montageschritt der erste Ring 4 unter Vorspannung in die Nut 9 des Radkörpers 10 eingeführt, wird in einem zweiten Montageschritt das Verschlussstück 3 in die Öffnung 20 und in den Freiraum zwischen dem Radkörper 10 und dem Ringpaket 2 eingeführt und wird in einem dritten Montageschritt das Verschlussstück 3 mittels Einführens des Passstifts 21 in die erste Bohrung 22 und mittels Verschraubens formschlüssig und kraftschlüssig mit dem Ringpaket 2 verbunden.

Erfindungsgemäß ist es auch denkbar, vor Einführung des ersten Rings 4 in die Nut 9 eine handelsübliche Montagepaste in die Nut 9 einzubringen.

Weiterhin ist es vorstellbar, das Verschlussstück 3 mit dem Ringpaket 2 zu verkleben.

Erfindungsgemäß ist es auch möglich, auf das Verschlussstück 3 zu verzichten.

In Fig. 2 ist eine erste Teilansicht eines Seitenrisses einer beispielhaften zweiten Ausführungsvariante einer erfindungsgemäßen Schalldämpfungsvorrichtung geschnitten dargestellt, bei welcher ein Ringpaket 2 mit einem Rad eines Fahrwerks eines Schienenfahrzeugs verbunden ist.

Das Ringpaket 2 weist einen offenen ersten Ring 4, einen offenen zweiten Ring 5 und einen offenen dritten Ring 6 auf, welche über eine viskoelastische erste Schicht 7 sowie eine viskoelastische zweite Schicht 8 über Vulkanisierung miteinander verbunden sind.

Die erste Schicht 7 ist dabei dem ersten Ring 4 und dem zweiten Ring 5 zwischengeordnet, die zweite Schicht 8 dem zweiten Ring 5 und dem dritten Ring 6.

Erfindungsgemäß ist es jedoch auch vorstellbar, anstatt der ersten Schicht 7 und der zweiten Schicht 8 zwischen dem ersten Ring 4 und dem zweiten Ring 5 einen offenen ersten Elastikring sowie zwischen dem zweiten Ring 5 und dem dritten Ring 6 einen offenen zweiten Elastikring vorzusehen und den ersten Elastikring und den zweiten Elastikring mit dem Ringpaket 2 zu verbinden (z.B. zu verkleben).

Die erste Schicht 7 und die zweite Schicht 8 sind in einem Elastomerwerkstoff ausgeführt und weisen jeweils eine Dicke von ca. 2 mm auf.

Der erste Ring 4, der zweite Ring 5 und der dritte Ring 6 weisen jeweils eine Dicke von ca. 5 mm auf und sind in Stahl ausgebildet. Erfindungsgemäß ist jedoch auch ein Einsatz anderer Werkstoffe für den ersten Ring 4, den zweiten Ring 5 und den dritten Ring 6 möglich, wie beispielsweise Edelstahl, Kupfer etc.

Der erste Ring 4 weist einen größeren Außendurchmesser als der zweite Ring 5 und der dritte Ring 6 auf. Ein entsprechender Überstand des ersten Rings 4 ist unter Vorspannung des ersten Rings 4 in eine als Nut 9 ausgebildete Vertiefung eines Radkörpers 10 des Rads eingeführt und in der Nut 9 mit dem Radkörper 10 verspannt. Im Bereich des Überstands des ersten Rings 4 weist der erste Ring 4 eine Mehrzahl an Ausnehmungen auf, wie sie beispielhaft in Fig. 4 und Fig. 5 gezeigt sind.

Das Rad umfasst den Radkörper 10 sowie eine Lauffläche 11, welche eine Schiene eines in Fig. 2 nicht gezeigten Gleises kontaktiert. Der Radkörper 10 weist eine Radnabe 12, einen Radsteg 13 sowie einen Radkranz 14 mit einem Spurkranz 15 auf.

Die Nut 9 ist umlaufend in dem Radkranz 14 auf einer der Lauffläche 11 abgewandten Seite ausgebildet, wodurch sich das Ringpaket 2 in Richtung der Radnabe 12 bzw. in Richtung einer Radmitte (Radachse 26) erstreckt.

Der erste Ring 4 ist einer Radaußenseite 16, der dritte Ring 6 einer Radinnenseite 17 und dem Radsteg 13 zugewandt angeordnet. Der zweite Ring 5 ist dem ersten Ring 4 und dem dritten Ring 6 zwischengeordnet.

Zwischen dem dritten Ring 6 und dem Radsteg 13 ist ein ausreichender Freiraum zur Verbindung eines in Fig. 3 sichtbaren Verschlussstücks 3 mit dem Ringpaket 2 vorgesehen.

Die Schalldämpfungsvorrichtung ist an der Radaußenseite 16 vorgesehen. Erfindungsgemäß ist es jedoch auch vorstellbar, die Schalldämpfungsvorrichtung an der Radinnenseite 17 mit dem Rad zu verbinden.

Weiterhin ist es denkbar, eine erste Schalldämpfungsvorrichtung an der Radaußenseite 16 und eine zweite Schalldämpfungsvorrichtung an der Radinnenseite 17 anzuordnen, wobei die zweite Schalldämpfungsvorrichtung auf einer ersten Nut (der Nut 9) in Bezug auf den Radsteg 13 gegenüberliegenden Seite in einer zweiten Nut mit dem Radkörper 10 verspannt werden kann.

In Fig. 3 ist eine zweite Teilansicht eines Seitenrisses jener beispielhaften zweiten Ausführungsvariante einer erfindungsgemäßen Schalldämpfungsvorrichtung, die auch in Fig. 2 gezeigt ist, geschnitten dargestellt.

Die Schalldämpfungsvorrichtung weist ein Ringpaket 2 und ein quaderförmiges Verschlussstück 3 auf.

Von dem Ringpaket 2, welches, wie in Fig. 2 gezeigt, einen offenen ersten Ring 4, einen offenen zweiten Ring 5 und einen offenen dritten Ring 6 sowie eine viskoelastische erste Schicht 7 und eine viskoelastische zweite Schicht 8 aufweist, ist in Fig. 3 nur der erste Ring 4 sichtbar.

Die Schalldämpfungsvorrichtung ist mit einem Radkörper 10 eines Rads eines Fahrwerks eines Schienenfahrzeugs verbunden. Das Rad umfasst den Radkörper 10 sowie eine Lauffläche 11. Der Radkörper 10 weist eine Radnabe 12, einen Radsteg 13 sowie einen Radkranz 14 mit einem Spurkranz 15 auf.

Der erste Ring 4 ist, wie auch im Zusammenhang mit Fig. 1 und Fig. 2 beschrieben, in eine Nut 9 eingeführt, welche in dem Radkranz 14, der Lauffläche 11 gegenüberliegend, vorgesehen ist.

Das Ringpaket 2 weist eine Öffnung 20 auf, die im Zusammenhang mit einer beispielhaften ersten Ausführungsvariante einer erfindungsgemäßen Schalldämpfungsvorrichtung in Fig. 1 sichtbar ist.

Diese Öffnung 20 ist mittels des Verschlussstücks 3 teilweise ausgefüllt. Das Verschlussstück 3 ist in jenem in Fig. 3 gezeigten Montagezustand zwischen dem Radsteg 13 und dem ersten Ring 4 angeordnet, wobei der erste Ring 4 das Verschlussstück 3 im Bereich eines im Zusammenhang mit der beispielhaften ersten Ausführungsvariante einer erfindungsgemäßen Schalldämpfungsvorrichtung in Fig. 1 sichtbaren ersten Endes 18 des Ringpakets 2 überlappt.

Das Verschlussstück 3 ist in Stahl ausgebildet, wobei jedoch auch andere Werkstoffe denkbar sind, wie beispielsweise Edelstahl, Kupfer etc.

Das Verschlussstück 3 weist einen Passstift 21 auf. Eine Gesamtdicke des Verschlussstücks 3 mit dem Passstift 21 beträgt ca. 20 mm.

Um das Verschlussstück 3 in einen Bereich zwischen dem Radsteg 13 und dem ersten Ring 4 einführen zu können, beträgt eine Distanz zwischen dem Radsteg 13 und dem ersten Ring 4 ca. 30 mm.

In dem in Fig. 3 gezeigten Montagezustand ist der Passstift 21 mit einer Presspassung in eine erste Bohrung 22 des ersten Rings 4, welche im Bereich des ersten Endes 18 des Ringpakets 2 vorgesehen ist, eingeführt.

Zusätzlich sind das Verschlussstück 3 und der erste Ring 4 im Bereich des ersten Endes 18 des Ringpaktes 2 mittels einer ersten Sechskantschraube 24 und einer ersten Mutter 27 sowie einer zweiten Sechskantschraube 25 und einer zweiten Mutter 28 miteinander verschraubt.

Das Verschlussstück 3 ist somit formschlüssig und kraftschlüssig mit dem Ringpaket 2 verbunden.

Die erste Sechskantschraube 24 und die zweite Sechskantschraube 25 sind als Durchgangsschrauben ausgebildet. Erfindungsgemäß ist jedoch auch eine Anordnung von Sacklochschrauben zwischen dem Ringpaket 2 und dem Verschlussstück 3 denkbar, wodurch auf die erste Mutter 27 und die zweite Mutter 28 verzichtet werden kann.

Wie auch im Zusammenhang mit Fig. 1 beschrieben, ist das Verschlussstück 3 in einer Weise ausgeführt und angeordnet, dass eine Gesamtunwucht des Rads mit der erfindungsgemäßen Schalldämpfungsvorrichtung kleiner als ein Gesamtunwucht-Grenzwert des Rads ist.

Fig. 4 zeigt einen Grundriss einer beispielhaften dritten Ausführungsvariante einer erfindungsgemäßen Schalldämpfungsvorrichtung mit einem ersten Ring 4, welcher an seinem Außenumfang 29 eine erste Ausnehmung 30 sowie eine Vielzahl an weiteren Ausnehmungen aufweist, welche als kantige Einkerbungen ausgebildet sind. Der erste Ring 4 weist dadurch eine gezackte Außenkontur auf. Die erste Ausnehmung 30 und die weiteren Ausnehmungen sind entlang des ganzen Außenumfangs 29 angeordnet.

Der erste Ring 4 ist Teil eines Ringpakets 2, wie es beispielhaft in Fig. 1, Fig. 2 und Fig. 3 dargestellt ist. Die erste Ausnehmung 30 sowie die weiteren Ausnehmungen des ersten Rings 4 sind in einem Verbindungsbereich 31 des ersten Rings 4 angeordnet, über welchen der erste Ring 4, wie im Zusammenhang mit Fig. 1, Fig. 2 und Fig. 3 beispielhaft beschrieben, beispielsweise in einer Nut 9 eines Radkörpers 10 eines Rads, also in einer Vertiefung des Radkörpers 10, mit dem Radkörper 10 verspannt sein kann.

In Fig. 5 ist ein Grundriss einer beispielhaften vierten Ausführungsvariante einer erfindungsgemäßen Schalldämpfungsvorrichtung mit einem ersten Ring 4, welcher an seinem Außenumfang 29 eine erste Ausnehmung 30 sowie eine Vielzahl an weiteren Ausnehmungen aufweist, welche als kreisförmig gerundete Einkerbungen ausgebildet sind, offenbart. Die erste Ausnehmung 30 und die weiteren Ausnehmungen sind entlang des ganzen Außenumfangs 29 angeordnet.

Der erste Ring 4 ist Teil eines Ringpakets 2, wie es beispielhaft in Fig. 1, Fig. 2 und Fig. 3 dargestellt ist. Die erste Ausnehmung 30 sowie die weiteren Ausnehmungen des ersten Rings 4 sind in einem Verbindungsbereich 31 des ersten Rings 4 angeordnet, über welchen der erste Ring 4, wie im Zusammenhang mit Fig. 1, Fig. 2 und Fig. 3 beispielhaft beschrieben, beispielsweise in einer Nut 9 eines Radkörpers 10 eines Rads, also in einer Vertiefung des Radkörpers 10, mit dem Radkörper 10 verspannt sein kann.

Erfindungsgemäß ist es auch vorstellbar, dass die erste Ausnehmung 30 und die weiteren Ausnehmungen als elliptisch oder oval etc. gerundete Einkerbungen ausgebildet sind, wobei auch Mischvarianten möglich sind.

Ferner ist es erfindungsgemäß denkbar, dass die erste Ausnehmung 30 und die weiteren Ausnehmungen teilweise als kantige und teilweise als gerundete Einkerbungen ausgeführt sind.

### Liste der Bezeichnungen

- 1: Klotzbremse
- 2: Ringpaket
- 3: Verschlussstück
- 4: Erster Ring
- 5: Zweiter Ring
- 6: Dritter Ring
- 7: Erste Schicht
- 8: Zweite Schicht
- 9: Nut
- 10: Radkörper
- 11: Lauffläche
- 12: Radnabe
- 13: Radsteg
- 14: Radkranz
- 15: Spurkranz
- 16: Radaußenseite
- 17: Radinnenseite
- 18: Erstes Ende
- 19: Zweites Ende
- 20: Öffnung
- 21: Passstift
- 22: Erste Bohrung
- 23: Zweite Bohrung
- 24: Erste Sechskantschraube
- 25: Zweite Sechskantschraube
- 26: Radachse
- 27: Erste Mutter
- 28: Zweite Mutter
- 29: Außenumfang
- 30: Erste Ausnehmung
- 31: Verbindungsbereich

## Patentansprüche

1. Schalldämpfungsvorrichtung für Fahrzeugräder, insbesondere für Räder von Schienenfahrzeugen, umfassend ein Ringpaket (2) mit zumindest einem offenen ersten Ring (4) und einem offenen zweiten Ring (5), welchen eine viskoelastische erste Schicht (7) oder ein offener Elastikring zwischengeordnet ist, **dadurch gekennzeichnet, dass** zumindest der erste Ring (4) in einem Verbindungsbereich (31), über welchen zumindest der erste Ring (4) in einer Vertiefung eines Radkörpers (10) eines Rads mit dem Radkörper (10) verspannbar ist, eine Mehrzahl an Ausnehmungen (30)
aufweist, wobei die Ausnehmungen (30) in dem Verbindungsbereich (31) als kantige oder/und gerundete Einkerbungen an einem Außenumfang (29) des zumindest ersten Rings (4) ausgebildet sind.

2. Schalldämpfungsvorrichtung nach Anspruch 1, **dadurch gekennzeichnet, dass** ein Verschlussstück (3) mit dem Ringpaket (2) verbunden ist, wobei das Verschlussstück (3) in einer Öffnung (20) zwischen einem ersten Ende (18) des Ringpakets (2) und einem zweiten Ende (19) des Ringpakets (2) angeordnet ist.

3. Schalldämpfungsvorrichtung nach Anspruch 2, **dadurch gekennzeichnet, dass** zwischen dem Verschlussstück (3) und dem Ringpaket (2) im Bereich des ersten Endes (18) oder des zweiten Endes (19) ein Spalt ausgebildet ist.

4. Schalldämpfungsvorrichtung nach Anspruch 2 oder 3, **dadurch gekennzeichnet, dass** das Verschlussstück (3) zwischen einem Radsteg (13) und dem zumindest ersten Ring (4) anordenbar ist.

5. Schalldämpfungsvorrichtung nach einem der Ansprüche 2 bis 4, **dadurch gekennzeichnet, dass** das Verschlussstück (3) formschlüssig mit dem Ringpaket (2) verbunden ist.

6. Schalldämpfungsvorrichtung nach einem der Ansprüche 2 bis 5, **dadurch gekennzeichnet, dass** das das Verschlussstück (3) kraftschlüssig mit dem Ringpaket (2) verbunden ist.

7. Schalldämpfungsvorrichtung nach einem der Ansprüche 2 bis 6, **dadurch gekennzeichnet, dass** das Verschlussstück (3) mit dem Ringpaket (2) verklebt ist.

8. Schalldämpfungsvorrichtung nach einem der Ansprüche 5 bis 7, **dadurch gekennzeichnet, dass** das Ringpaket (2) zumindest im Bereich des ersten Endes (18) zumindest eine erste Bohrung (22) aufweist, in welche ein Passstift (21) des Verschlussstücks (3) oder ein mit dem Verschlussstück (3) verbundenes Passungsteil eingeführt ist.

9. Schalldämpfungsvorrichtung nach Anspruch 8, **dadurch gekennzeichnet, dass** das Ringpakets (2) im Bereich des zweiten Endes (19) zumindest eine zweite Bohrung (23) aufweist.

10. Schalldämpfungsvorrichtung nach einem der Ansprüche 5 bis 7, **dadurch gekennzeichnet, dass** zumindest im Bereich des ersten Endes (18) das Ringpaket (2) zumindest einen Passstift (21) aufweist oder mit dem Ringpaket (2) zumindest ein Passungsteil verbunden ist, welcher oder welches in eine Bohrung des Verschlussstücks (3) eingeführt ist.

11. Schalldämpfungsvorrichtung nach einem der Ansprüche 6 bis 10, **dadurch gekennzeichnet, dass** das Ringpaket (2) mit dem Verschlussstück (3) verschraubt ist.

12. Schalldämpfungsvorrichtung nach einem der Ansprüche 2 bis 11, **dadurch gekennzeichnet, dass** das Ringpaket (2) das Verschlussstück (3) überlappend ausgebildet und angeordnet ist.

13. Schalldämpfungsvorrichtung nach Anspruch 12, **dadurch gekennzeichnet, dass** der zumindest erste Ring (4) zusammen mit dem Verschlussstück (3) im Bereich der Öffnung (20) einen Rücksprung bildend angeordnet ist.

14. Schalldämpfungsvorrichtung nach einem der Ansprüche 1 bis 13, **dadurch gekennzeichnet, dass** der zumindest erste Ring (4) einen größeren Außendurchmesser als der zweite Ring (5) aufweist.

15. Schalldämpfungsvorrichtung nach einem der Ansprüche 1 bis 14, **dadurch gekennzeichnet, dass** der zumindest erste Ring (4) in einer Nut (9) des Radkörpers (10), welche auf einer Seite eines Radkranzes (14) des Rads, welche einer Lauffläche (11) des Rads abgewandt ist, vorgesehen ist, mit dem Radkörper (10) verspannbar ist.

16. Schalldämpfungsvorrichtung nach einem der Ansprüche 2 bis 15, **dadurch gekennzeichnet, dass** das Verschlussstück (3) in einer Weise ausgeführt und angeordnet ist, dass eine Gesamtunwucht des Rads mit der Schalldämpfungsvorrichtung gleich oder kleiner als ein Gesamtunwucht-Grenzwert des Rads ist.

17. Rad für Schienenfahrzeuge mit zumindest einer Schalldämpfungsvorrichtung nach einem der Ansprüche 1 bis 16.

18. Rad nach Anspruch 17, **dadurch gekennzeichnet, dass** eine erste Schalldämpfungsvorrichtung an einer Radaußenseite (16) vorgesehen ist und eine zweite Schalldämpfungsvorrichtung an einer Radinnenseite (17) vorgesehen ist.

19. Fahrwerk für Schienenfahrzeuge mit Rädern nach Anspruch 17 oder 18, **dadurch gekennzeichnet, dass** zumindest eine Klotzbremse (1) vorgesehen ist.

## Claims

1. Sound damping device for vehicle wheels, in particular for wheels of rail vehicles, comprising a ring stack (2) with at least one open first ring (4) and an open second ring (5), which is arranged between a viscoelastic first layer (7) or an open elastic ring,
**characterised in that** at least the first ring (4) has a number of cutouts (30) in a connection region (31), via which at least the first ring (4), in a recess of a wheel body (10) of a wheel, can be tensioned with the wheel body (10), wherein the cutouts (30) are embodied in the connection region (31) as angular or/and rounded indentations on an outer circumference (29) of the at least first ring (4).

2. Sound damping device according to claim 1, **characterised in that** a locking piece (3) is connected to the ring stack (2), wherein the locking piece (3) is arranged in an opening (20) between a first end (18) of the ring stack (2) and a second end (19) of the ring stack (2).

3. Sound damping device according to claim 2, **characterised in that** a gap is embodied between the locking piece (3) and the ring stack (2) in the region of the first end (18) or the second end (19).

4. Sound damping device according to claim 2 or 3, **characterised in that** the locking piece (3) can be arranged between a wheel web (13) and the at least first ring (4).

5. Sound damping device according to one of claims 2 to 4, **characterised in that** the locking piece (3) is connected to the ring stack (2) with a positive fit.

6. Sound damping device according to one of claims 2 to 5, **characterised in that** the locking piece (3) is connected to the ring stack (2) with a material bond.

7. Sound damping device according to one of claims 2 to 6, **characterised in that** the locking piece (3) is adhesively bonded to the ring stack (2).

8. Sound damping device according to one of claims 5 to 7, **characterised in that** the ring stack (2) has at least one first bore hole (22) at least in the region of the first end (18), in which a fitting pin (21) of the locking piece (3) or a fitting part connected to the locking piece (3) is inserted.

9. Sound damping device according to claim 8, **characterised in that** the ring stack (2) has at least one second bore hole (23) in the region of the second end (19).

10. Sound damping device according to one of claims 5 to 7, **characterised in that,** at least in the region of the first end (18), the ring stack (2) has at least one fitting pin (21) or at least one fitting part is connected to the ring stack (2), which is inserted into a bore hole of the locking piece (3).

11. Sound damping device according to one of claims 6 to 10, **characterised in that** the ring stack (2) is screwed to the locking piece (3).

12. Sound damping device according to one of claims 2 to 11, **characterised in that** the ring stack (2) is designed and arranged so as to overlap the locking piece (3).

13. Sound damping device according to claim 12, **characterised in that** at least the first ring (4) is arranged together with the locking piece (3) in the region of the opening (20) so as to form a recess.

14. Sound damping device according to one of claims 1 to 13, **characterised in that** the at least first ring (4) has a larger outer diameter than the second ring (5).

15. Sound damping device according to one of claims 1 to 14, **characterised in that** the at least one first ring (4) is provided in a groove (9) of the wheel body (10), which is provided on a side of a wheel rim (14) of the wheel, which side faces away from a running surface (11) of the wheel, and can be tensioned with the wheel body (10).

16. Sound damping device according to one of claims 2 to 15, **characterised in that** the locking piece (3) is designed and arranged such that a total imbalance of the wheel with the sound damping device is equal to or smaller than a total imbalance limit value of the wheel.

17. Wheel for rail vehicles with at least one sound damping device according to one of claims 1 to 16.

18. Wheel according to claim 17, **characterised in that** a first sound damping device is provided on a wheel outer side (16) and a second sound damping device is provided in a wheel inner side (17).

19. Bogie for rail vehicles with wheels according to claim 17 or 18, **characterised in that** at least one block brake (1) is provided.

## Revendications

1. Dispositif d'amortissement acoustique pour des roues de véhicule, en particulier pour des roues de véhicules ferroviaires, comprenant un ensemble de bagues (2) avec au moins une première bague ouverte (4) et une seconde bague ouverte (5), entre lesquelles une première couche viscoélastique (7) ou une bague élastique ouverte est intercalée,
**caractérisé en ce qu'**au moins la première bague (4) dans une zone de liaison (31), par le biais de laquelle au moins la première bague (4) peut être tendue avec le corps de roue (10) dans un approfondissement d'un corps de roue (10) d'une roue, présente une pluralité d'évidements (30), dans lequel les évidements (30) sont réalisés dans la zone de liaison (31) en tant qu'encoches anguleuses et/ou arrondies au niveau d'une périphérie externe (29) de l'au moins première bague (4).

2. Dispositif d'amortissement acoustique selon la revendication 1, **caractérisé en ce qu'**une pièce de verrouillage (3) est reliée à l'ensemble de bagues (2), dans lequel la pièce de verrouillage (3) est disposée dans une ouverture (20) entre une première extrémité (18) de l'ensemble de bagues (2) et une seconde extrémité (19) de l'ensemble de bagues (2).

3. Dispositif d'amortissement acoustique selon la revendication 2, **caractérisé en ce que,** entre la pièce de verrouillage (3) et l'ensemble de bagues (2) une fente est réalisée dans la zone de la première extrémité (18) ou de la seconde extrémité (19).

4. Dispositif d'amortissement acoustique selon la revendication 2 ou 3, **caractérisé en ce que** la pièce de verrouillage (3) peut être disposée entre une âme de roue (13) et l'au moins première bague (4).

5. Dispositif d'amortissement acoustique selon l'une quelconque des revendications 2 à 4, **caractérisé en ce que** la pièce de verrouillage (3) est reliée par complémentarité de formes à l'ensemble de bagues (2).

6. Dispositif d'amortissement acoustique selon l'une quelconque des revendications 2 à 5, **caractérisé en ce que** la pièce de verrouillage (3) est reliée par complémentarité de forces à l'ensemble de bagues (2).

7. Dispositif d'amortissement acoustique selon l'une quelconque des revendications 2 à 6, **caractérisé en ce que** la pièce de verrouillage (3) est collée à l'ensemble de bagues (2).

8. Dispositif d'amortissement acoustique selon l'une quelconque des revendications 5 à 7, **caractérisé en ce que** l'ensemble de bagues (1) présente au moins dans la zone de la première extrémité (18) au moins un premier alésage (22), dans lequel une goupille de centrage (21) de la pièce de verrouillage (3) ou un élément d'ajustement relié à la pièce de verrouillage (3) est introduit(e).

9. Dispositif d'amortissement acoustique selon la revendication 8, **caractérisé en ce que** l'ensemble de bagues (2) présente au moins un second alésage (23) dans la zone de la seconde extrémité (19).

10. Dispositif d'amortissement acoustique selon l'une quelconque des revendications 5 à 7, **caractérisé en ce qu'**au moins dans la zone de la première extrémité (18) l'ensemble de bagues (2) présente au moins une goupille de centrage (21) ou au moins un élément d'ajustement est relié à l'ensemble de bagues (2), qui est introduit(e) dans un alésage de la pièce de verrouillage (3).

11. Dispositif d'amortissement acoustique selon l'une quelconque des revendications 6 à 10, **caractérisé en ce que** l'ensemble de bagues (2) est vissé avec la pièce de verrouillage (3).

12. Dispositif d'amortissement acoustique selon l'une quelconque des revendications 2 à 11, **caractérisé en ce que** l'ensemble de bagues (2) est réalisé et disposé de manière chevauchant la pièce de verrouillage (3).

13. Dispositif d'amortissement acoustique selon la revendication 12, **caractérisé en ce que** l'au moins première bague (4) est disposée pour former un retrait conjointement avec la pièce de verrouillage (3) dans la zone de l'ouverture (20).

14. Dispositif d'amortissement acoustique selon l'une quelconque des revendications 1 à 13, **caractérisé en ce que** l'au moins première bague (4) présente un diamètre externe plus grand que la seconde bague (5).

15. Dispositif d'amortissement acoustique selon l'une quelconque des revendications 1 à 14, **caractérisé en ce que** l'au moins première bague (4) peut être tendue avec le corps de roue (10) dans une rainure (9) du corps de roue (10), laquelle rainure est prévue sur une face d'une jante de roue (14) de la roue, laquelle jante de roue est opposée à une surface de roulement (11) .

16. Dispositif d'amortissement acoustique selon l'une quelconque des revendications 2 à 15, **caractérisé en ce que** la pièce de verrouillage (3) est exécutée et disposée d'une manière selon laquelle un déséquilibre total de la roue avec le dispositif d'amortissement acoustique est inférieur ou égal à une valeur limite de déséquilibre total de la roue.

17. Roue pour véhicules ferroviaires avec au moins un dispositif d'amortissement acoustique selon l'une quelconque des revendications 1 à 16.

18. Roue selon la revendication 17, **caractérisée en ce qu'**un premier dispositif d'amortissement acoustique est prévu au niveau d'une face arrière de roue (16) et un second dispositif d'amortissement acoustique est prévu au niveau d'une face interne de roue (17).

19. Châssis pour véhicules ferroviaires avec des roues selon la revendication 17 ou 18, **caractérisé en ce qu'**au moins un frein à sabot (1) est prévu.
